# EUROPEAN PATENT APPLICATION

(11) **EP 2 447 111 A2**
(43) Date of publication of application: **02.05.2012**
(21) Application number: 11182078.3
(22) Date of filing: 21.09.2011
(51) Int. Cl.: B60N 2/235

(54) **Seat reclining apparatus for vehicle**

(30) Priority: 26.10.2010 JP 2010239417
(71) Applicant: Fuji Kiko Co., Ltd., Shizuoka 431-0431 (JP)
(72) Inventor: Kuno, Kenji, Kosai-shi, Shizuoka 431-0431 (JP)
(74) Representative: Grünecker, Kinkeldey, Stockmair & Schwanhäusser

(57) **Abstract**

In a seat reclining apparatus for a vehicle, the inner circumference surfaces of the three restriction guide portions and the three protruding portions which are in the set relations being positioned, respectively, in different positions in the radial direction so that, when the three protruding portions are pivoted to positions to confront other restriction guide portions that are positioned adjacent to the restriction guide portions which are in the set relations, the protruding portions are not abutted on the inner circumference surfaces of the other restriction guide portions, and one of the restriction guide portions having an inner circumference surface located on a radially innermost side, having an escape space which is formed between the one of the restriction guide portions and the corresponding lock tooth in the axial direction, and which is arranged to avoid an interference with one of the protruding portions located on a radially outermost side.

## Description

### BACKGROUND OF THE INVENTION

This invention relates to a seat reclining apparatus for a vehicle which includes three lock teeth, and more specifically to an improvement of a seat reclining apparatus for a vehicle which is arranged to restrict an external tooth of a lock tooth from engaging with an internal tooth gear of a pivot member.

In a seat of a vehicle, there is provided a seat reclining apparatus arranged to vary an angle of a seat back with respect to a seat cushion. This seat reclining apparatus can pivot the seat back in an operation range of substantially 180 degrees from a frontmost tilting position to a rearmost tilting position. In a reclining range from a first lock position in which the seat back is slightly tilted from an upright position in the rearward direction, to a full flat position in which the seat back is tilted to a flat state in the rearward direction, it is possible to lock at an arbitrary angle. Moreover, it is possible to lock in a table lock position in which the seat back is tilted to the flat state in the forward direction. Moreover, a free range in which the seat back is not locked is set in a range from the first lock position to the table lock position.

A patent document 1 (U.S. Patent No. 5,779,313 (corresponding to Japanese Patent Application Publication No. 09-183327) discloses a seat reclining apparatus which is arranged to set the free range, and which includes followers (lock teeth) 5 each having an external tooth gear, and a peg (protruding portion) 12 protruding in an axial direction; and a backrest cheek (pivot member) 2 having an internal tooth gear, and a stepped track P. The pegs 12 are abutted on a small diameter portion of the stepped track P so as to restrict movements of the followers 5 in the radially outward direction. With this, the external tooth gears of the follower 5 are restricted to be engaged with the internal tooth gear of the backrest cheek 2.

In recent seat reclining apparatus, it is required that an operation range of the seat back is substantially 180 degrees from the table lock position to the full flat position. Moreover, it is required that the seat reclining apparatus has a high mechanical strength in consideration of collision safety. Accordingly, the number of the lock teeth tends to increase to three or four.

In the seat reclining apparatus, in order to restrict or allow the engagements between the external tooth gears of the lock teeth and the internal tooth gear of the pivot member, each of the lock teeth includes a protruding portion protruding in the axial direction, and the pivot member includes restriction guide portions formed on the inner circumference surface of the pivot member to correspond to the protruding portions, and arranged to guide the protruding portions in the circumferential direction to restrict the movements of the protruding portions in the radially outward directions. However, when the number of the lock teeth is three, ranges in which one of the restriction guide portions is formed or not formed on the inner circumference surface of the pivot member becomes 120 degrees which is obtained by dividing 360 degrees of an angle of the circle by 3 of the number of the lock teeth. This 120 degrees is an angle that the lock tooth can be moved. Accordingly, it is not possible to set the operation range of the seat back to 180 degrees, and the operation range of the seat back is limited.

Japanese Patent Application Publication No. 2001-17259 discloses a seat reclining apparatus including three lock plates (lock teeth) 5. One of the lock plates 5 includes a second guided protruding portion (protruding portion) 54. When this second guided protruding portion 54 is positioned at a small width guide groove 85b of a ringed guide groove 85 formed on an inner surface of an internal tooth gear member 8, an engagement tooth 51 is restricted from engaging with the internal tooth gear 8 by the movement of the lock plate 5 having the second guided protruding portion 54 in the radially outward direction. With this, the cam member 6 cannot be pivoted in a lock direction. Consequently, two other lock plates 5 are not pushed in the radially outward direction. Therefore, the engagement teeth 51 of the three lock plates 5 are not engaged with the internal tooth gear 8.

### SUMMARY OF THE INVENTION

However, in the seat reclining apparatus having a plurality of lock teeth, the cam is arranged to be moved in the radially outward direction with respect to the center so as to align (center) so that the external tooth gears are evenly engaged with the internal tooth gear. Accordingly, the lock tooth having no protruding portion is pushed out in the radially outward direction by the cam capable of moving in the radially outward direction by the aligning function. Moreover, there is provided an unpressed region in which the cam does not push in any directions, between a position in which the cam pushes the lock teeth in the lock direction by pivoting the cam in the lock direction, and a position in which the cam pushes the lock teeth in the lock release direction by pivoting the cam in the unlock direction. In a case in which the seat back is positioned in the free range when the lock release operation is not performed by the operation lever, the cam is urged and pivoted in the lock direction by the urging force of the spring so as to push the lock teeth in the lock directions. However, the lock tooth having the protruding portion is restricted to be moved in the radially outward direction due to the free range. The cam is stopped in a state in which the cam pushes the lock tooth having the protruding portion in the lock direction. In this case, even when the pivot movement of the cam is stopped, the lock teeth having no protruding portion can be further moved in the radially outward directions by a distance of the unpressed range. Therefore, the external tooth gears of the lock teeth having no protruding portion may contact the internal tooth gear of the pivot member. In particular, when the seat back is raised from the table lock position in which the seat back is tilted in the forward direction, to the reclining range, tooth tops of the external tooth gears and the internal tooth gear contact each other, so that an abnormal sound is prone to be generated. Moreover, the operation characteristics are deteriorated.

It is, therefore, an object of the present invention to provide a seat reclining apparatus for a vehicle which is devised to solve the above-mentioned problems, to surely restrict external tooth gears of three lock teeth from engaging with an internal tooth gear, and to ensure operation angle of 180 degrees.

According to one aspect of the present invention, a base member connected to one of a seat cushion and a seat back; a pivot member connected to the other of the seat cushion and the seat back, and arranged to be pivoted relative to the base member, the pivot member including an internal tooth gear formed on an inner circumference surface of the pivot member; three lock teeth which are disposed in a circumferential direction between the base member and the pivot member in an axial direction, and each of which has an external tooth gear; a guide protruding portion which is provided to the base member, and which guides the lock teeth to be moved in a radial direction; a cam which is disposed in a central position surrounded by the three lock teeth, which is arranged to push the lock teeth to be moved to a lock position in which the external tooth gear is engaged with the internal tooth gear, and a lock release position in which the external tooth gear is disengaged from the internal tooth gear; an urging member arranged to urge and pivot the cam in the lock direction; three protruding portions each of which is formed on one of the lock teeth, and each of which protrudes toward the pivot member; and three restriction guide portions each of which is formed into an arc shape, each of which is formed on an inner circumference surface of the pivot member, each of which protrudes toward a center in a radially inward direction, and which are arranged to be abutted on the protruding portions of the lock teeth, and thereby to restrict movements of the lock teeth to the lock positions, each of the protruding portions being in a set relation with one of the restriction guide portions, the three lock teeth being restricted to be moved to the lock positions when the three protruding portions are abutted, respectively, inner circumference surfaces of the three restriction guide portions which are in the set relations with the three protruding portions, the inner circumference surfaces of the three restriction guide portions and the three protruding portions which are in the set relations being positioned, respectively, in different positions in the radial direction so that, when the three protruding portions are pivoted to positions to confront other restriction guide portions that are positioned on one side of the rotational directions adjacent to the restriction guide portions which are in the set relations with the protruding portions, the protruding portions are not abutted on the inner circumference surfaces of the other restriction guide portions, and one of the restriction guide portions having an inner circumference surface located on a radially innermost side, having an escape space which is formed between the one of the restriction guide portions and the corresponding lock tooth in the axial direction, and which is arranged to avoid an interference with one of the protruding portions located on a radially outermost side.

### BRIEF DESCRIPTION OF THE DRAWINGS

FIGS. 1A and 1B are views showing a seat reclining apparatus according to one embodiment of the present invention. FIG. 1A is a front view shown by cutting a part of the seat reclining apparatus. FIG. 1B is a view showing the seat reclining apparatus as viewed from an arrow A-A of FIG. 1A.

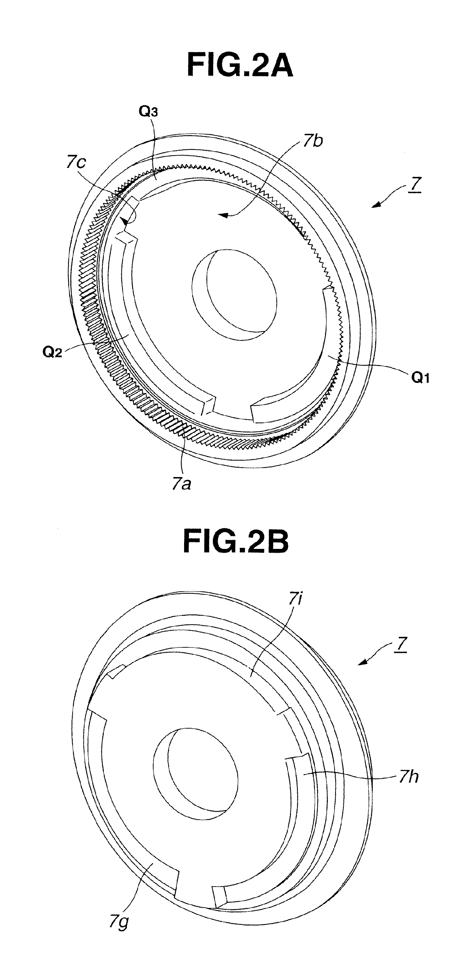

FIGS. 2A and 2B are views showing a cover member of the seat reclining apparatus of FIGS. 1A and 1B. FIG. 2A is a perspective view showing an inside of the cover member. FIG. 2B is a perspective view showing an outside of the cover member.

FIGS. 3A and 3B are views showing a spring hanging plate of the seat reclining apparatus of FIGS. 1A and 1B. FIG. 3A is a front view showing the spring hanging plate. FIG. 3B is a view showing the spring hanging plate as viewed from a B-B line of FIG. 3A.

FIG. 4 is an illustrative view showing the seat reclining apparatus when a seat back is positioned in a table lock position.

FIGS. 5A to 5D are illustrative views showing the seat reclining apparatus when the seat back is positioned in a free range.

FIG. 6 is an illustrative view showing the seat reclining apparatus when the seat back is positioned in a first lock position.

FIGS. 7A to 7D are illustrative views showing the seat reclining apparatus when the seat back is positioned in a reclining range.

FIG. 8 is an illustrative view showing the seat reclining apparatus when the seat back is positioned in a full flat position.

FIG. 9 is a configuration view showing a mounting state in which the vehicular seat reclining apparatus is mounted to the seat.

### DETAILED DESCRIPTION OF THE INVENTION

Hereinafter, a seat reclining apparatus for a vehicle according to one embodiment of the present invention is illustrated.

### (Structure)

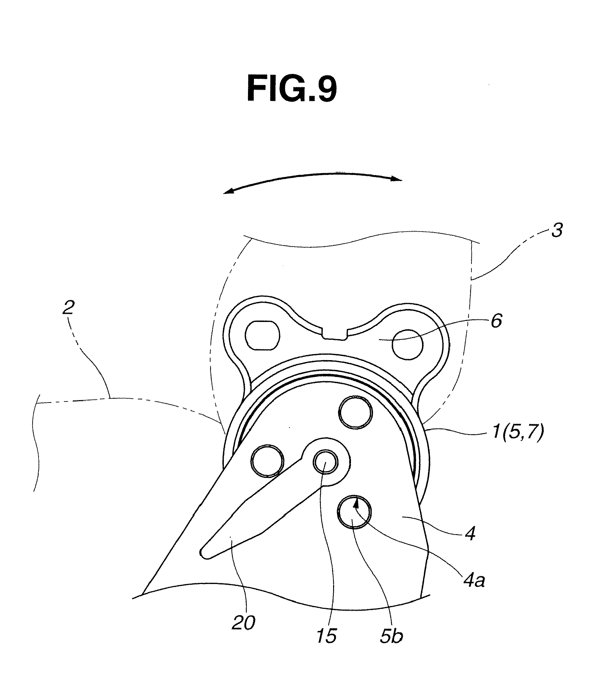

As shown in FIG. 9, there are provided a seat cushion 2 which is a sitting portion (bottom portion), and a seat back 3 provided on the seat cushion 2 to be pivoted in forward and rearward directions of the vehicle. The seat cushion 2 is connected through a base bracket 4 with a body frame (base member) 5. The seat back 3 is connected through an arm bracket 6 with a cover member (pivot member) 7. Moreover, there is provided a spring (not shown) arranged to urge the seat back 3 in a leftward direction of FIG. 9 (the forward direction of the vehicle) with respect to the seat cushion 2.

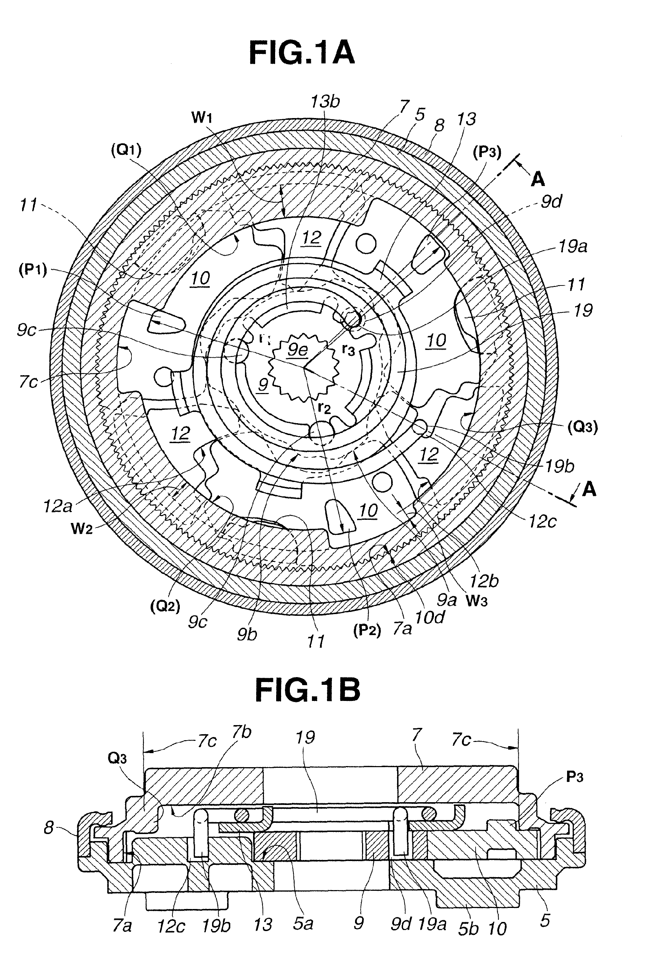

A seat reclining apparatus 1 shown in FIG. 1 includes the body frame 5 and the cover member 7. As shown in FIG. 1, the body frame 5 includes a circular recessed portion 5a formed by half blanking of the inside of a disc portion by press. Similarly, the cover member 7 includes a circular recessed portion 7b. Moreover, the cover member 7 includes an internal tooth gear 7a formed on an inner circumference surface of the circular recessed portion 7b. The cover member 7 is coaxially fit in or mounted in the body frame 5 to be pivoted relative to the body frame 5 so that an inner circumference surface of the circular recessed portion 5a of the body frame 5 is mounted on an outer circumference portion of the cover member 7. A first end portion of a ring-shaped holder 8 is connected or joined with the body frame 5 by laser welding. A second end portion of the holder 8 is bent in a radially inward direction so as to restrict an axial movement of the cover member 7. With this, the body frame 5 and the cover member 7 are held to be pivoted relative to each other so that the body frame 5 and the cover member 7 are not separated in the axial direction. Moreover, the seat reclining apparatus 1 includes lock teeth 10 disposed between the body frame 5 and the cover member 7 in the axial direction. Each of the lock teeth 10 is arranged to be moved in the radial direction. That is, three lock teeth 10 are disposed at intervals of substantially 120 degrees in the circumferential direction, as shown in FIG. 1A. Each of the lock teeth 10 is swingable along an arc lines (path). The body frame 5 includes shaft protruding portions (guide protruding portions) 11 each of which is a substantially semicolumn shape, and each of which is located radially inside one of the arc lines. The shaft protruding portions 11 are integrally formed with the body frame 5. Moreover, the body frame 5 includes three guide protruding portions (guide protruding portions) 12 each located near one of both ends of one of the arc lines, radially outside the one of the arc lines, between adjacent two of the lock teeth 10, for guiding the corresponding lock tooth 10. The guide protruding portions 12 are integrally formed with the body frame 5. Each of the guide protruding portions 12 includes first and second outer circumference guide surfaces 12a and 12b located on both sides of the each of the protruding portions 12 in the circumference direction. With this, the external tooth gear 10d of each lock tooth 10d is swung along the corresponding arc line, so that the each lock tooth 10d is moved substantially in the radial direction of the body frame 5. Each of the lock teeth 10 includes the external tooth gear 10d formed on a surface confronting the internal tooth gear 7a of the cover member 7, and arranged to be engaged with the internal tooth gear 7a of the cover member 7.

Moreover, the seat reclining apparatus 1 includes a cam 9 arranged to move the lock teeth 10 between a lock position to engage the external tooth gears 10d with the internal tooth gear 7a, and a lock release position to release the engagement between the external tooth gears 10d and the internal tooth gear 7a. The cam 9 is arranged to push the lock teeth 10 each having the external tooth gear 10d, toward the internal tooth gear 7a of the cover member 7, so as to engage the external tooth gears 10d with the internal tooth gear 7a. When the cam 9 is pivoted in a counterclockwise direction of FIG. 1A, the cam 9 pushes the three lock teeth 10 in a radially outward direction of the body frame 5, so that the external tooth gears 10d are engaged with the internal tooth gear 7a. Conversely, when the cam 9 is pivoted in a clockwise direction of FIG. 1A, the external tooth gears 10d are disengaged from the internal tooth gear 7a. The pivot movement of the cover member 7 with respect to the body frame 5 is restricted by the engagements of the external tooth gears 10d and the internal tooth gear 7a. Consequently, the seat back 3 is held and fixed with respect to the seat cushion 2. The cam 9 includes lock cam surfaces 9a each arranged to swing one of the lock teeth 10 in the clockwise direction, and to engage the external tooth gears 10d with the internal tooth gear 7a, and lock release (unlock) cam surfaces 9b each arranged to swing the lock tooth 10 in the counterclockwise direction, and to disengage the external tooth gears 10d from the internal tooth gear 7a.

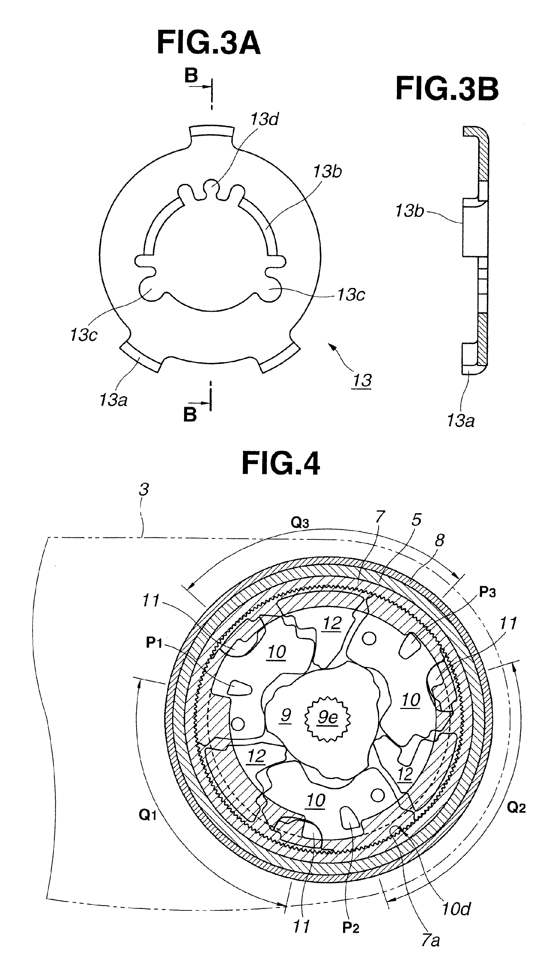

Moreover, the seat reclining apparatus 1 includes a spring 19 which serves as an urging member arranged to constantly urge the cam 9 in a lock direction, and which is a torsion coil spring. As shown in FIG. 1B, the spring 19 is received between the body frame 5 and the cover member 7 in the axial direction. A spring hanging plate 13 is provided between the spring 19 and the body frame 5. The spring hanging plate 13 is shaped like a ring, as shown in FIG. 3. The spring hanging plate 13 includes three outer circumference retaining portions 13a and two inner circumference retaining portions 13b each of which is formed by bending into a flange shape. Moreover, the spring hanging plate 13 includes two circular recessed portions 13c located on an inner circumference side of the spring hanging plate 13. On the other hand, the cam 9 includes raised portions 9c protruding from the cam 9 in the axial direction. The raised portions 9c are mounted, respectively, in the recessed portions 13c of the spring hanging plate 13, so that the spring hanging plate 13 rotates as a unit with the cam 9. Furthermore, the spring hanging plate 13 includes an engagement hole 13d. On the other hand, the spring 19 includes an inside end portion 19a formed by bending in the axial direction. The inside end portion 19a of the spring 19 is mounted in the engagement hole 13d of the spring hanging plate 13. An arc portion near the inside end portion 19a of the spring 19 is engaged with one of the inner circumference retaining portions 13b. The cam 9 includes an escape hole 9d. The inside end portion 19a of the spring 19 is freely inserted in the escape hole 9d. One of the three guide protruding portions 12 includes a spring hanging recessed portion 12c. On the other hand, the spring 19 includes an outside end portion 19b formed by bending. The outside end portion 19b of the spring 19 is hung on the spring hanging recessed portion 12c of the one of the three guide protruding portions 12.

Moreover, there is provided an operation lever 20 arranged to pivot the cam 9 in the lock release direction against the urging force of the spring 19. That is, an operation shaft 15 shown in FIG. 9 is fixed in a central hole 9e of the cam 9 by the press fit. The operation lever 20 is mounted on the operation shaft 15.

Next, a structure to restrict or release engagements of the external tooth gears 10d with the internal tooth gear 7a by the movements of the lock teeth 10 in the radially outward direction is illustrated below. Three lock teeth 10 includes, respectively, first to third protruding portions P1, P2, and P3 each of which has a substantially triangular cross section, and each of which protrudes toward the cover member 7 in the axial direction. On the other hand, the cover member 7 includes first to third restriction guide portions Q1, Q2, and Q3 each of which is formed into an arc shape, which are formed on the inner circumference surface of the cover member 7, and each of which protrudes toward the center in a radially inward direction. Inner circumference surfaces of these first to third restriction guide portions Q1, Q2, and Q3 are arranged to be slid in the circumference direction with respect to the first to third protruding portions P1, P2, and P3 so as to restrict the engagements of the external tooth gears 10d with the internal tooth gear 7a in a set free region by movements of the first to third protruding portions P1, P2, and P3.

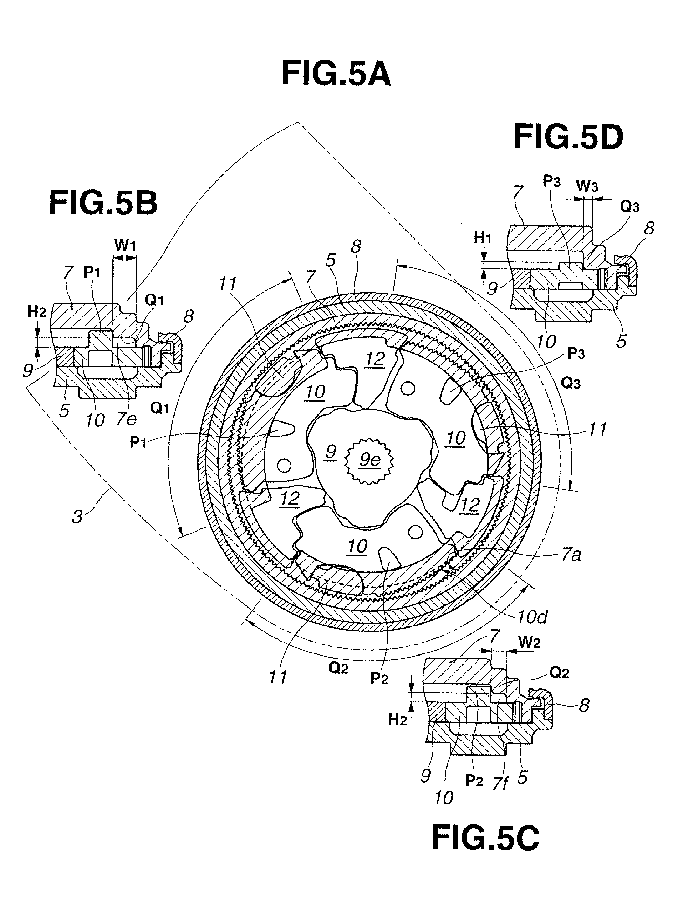

The first to third protruding portions P1, P2, and P3 are in set relations, respectively, with the first to third restriction guide portions Q1, Q2, and Q3 to form three pairs. The set relation means a relation that each of the protruding portions P1, P2, and P3 is restricted to be moved in the radially outward direction when the each of the protruding portions P1, P2, and P3 and one of the restriction guide portions Q1, Q2, and Q3 which are in the set relations confront each other in the radial direction, as shown in FIG. 5. The first protruding portion P1 and the first restriction guide portion Q1 are in the set relation. The second protruding portion P2 and the second restriction guide portion Q2 are in the set relation. The third protruding portion P3 and the third restriction guide portion Q3 are in the set relation. A position relationship in which three pairs of the protruding portions P1, P2, and P3 and the restriction guide portions Q1, Q2, and Q3 which are in the set relations confront each other in the radial direction is represented by (P1, Q1) (P2, Q2) (P3, Q3). In the state of FIG. 5A, the movements of the three lock teeth 10 in the radially outward direction are simultaneously restricted, as shown in FIGS. 5B-5D.

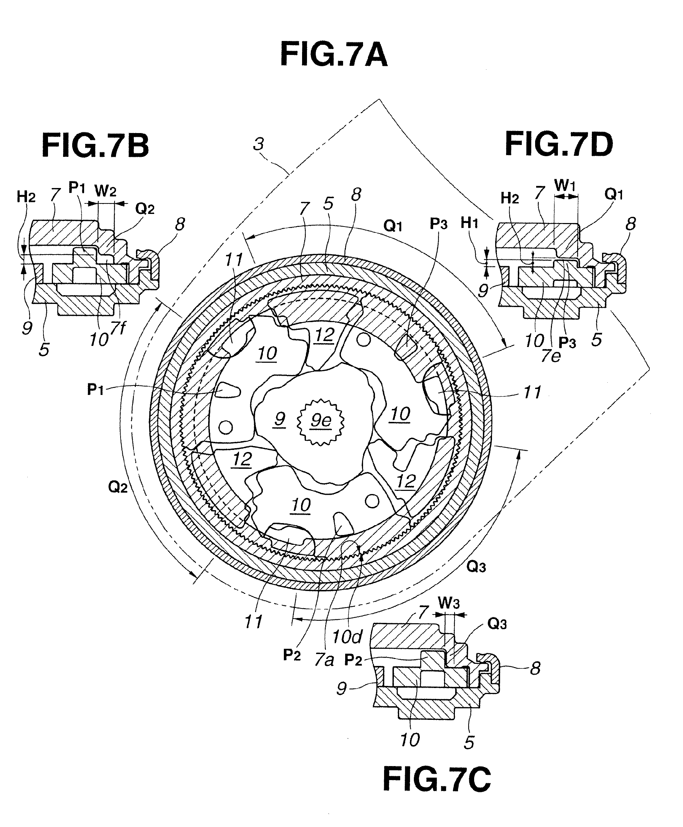

When the protruding portions P1, P2, and P3 confront, respectively, the restriction guide portions Q2, Q3, and Q1 which is positioned in the counterclockwise direction adjacent to the restriction guide portions Q1, Q2, and Q3 which are in the set relations with the protruding portions P1, P2, and P3, by the pivot movement of the cover member 7 with the seat back 3 from the state of FIG. 5A, as shown in FIG. 7A, the position relationship becomes (P1, Q2) (P2, Q3) (P3, Q1). The first to third protruding portions P1, P2, and P3 are allowed to be moved in the radially outward direction, irrespective of the existence of the first to third restriction guide portions Q2, Q3, and Q1.

When the three pairs of the protruding portions P1, P2, and P3 and the restriction guide portions Q1, Q2, and Q3 which are in the set relations confront each other in the radial direction as shown in FIG. 5A, the movements of the protruding portions P1, P2, and P3 in the radially outward direction are restricted. When the protruding portions P1, P2, and P3 confront, respectively, the restriction guide portions Q2, Q3, and Q1 which are not in the set relations with these protruding portions P1, P2, and P3, and which are positioned adjacent to the restriction guide portions Q1, Q2, and Q3 which are in the set relations with these protruding portions P1, P2, and P3, on one sides of these restriction guide portions Q1, Q2, and Q3, as shown in FIG. 7A. With this, even when the protruding portions P1, P2, and P3 and the restriction guide portions Q2, Q3, and Q1 confront each other in the radial direction, the protruding portion P1, P2, and P3 are not restricted to be moved in the radially outward direction. These structures are illustrated below.

As shown in FIG. 1, the first to third restriction guide portions Q1, Q2, and Q3 have protruding quantities that guide portions Q1, Q2, and Q3 protrude from the inner circumference surface 7c of the cover member 7 toward the center in the radial direction, and that becomes smaller in the counterclockwise direction. That is, a width W1 of the restriction guide portion Q1 is larger than a width W2 of the restriction guide portion Q2. The width W2 of the restriction guide portion Q2 is larger than a width of the restriction guide portion Q3. On the other hand, the first to third protruding portions P1, P2, and P3 of the three lock teeth 10 have distances r1, r2, and r3 which are from the center to the first to third protruding portions P1, P2, and P3, and which becomes larger in the counterclockwise direction that is a direction in which the first to third restriction guide portions Q1, Q2, and Q3 are formed. That is, the distance r1 of the first protruding portion Q1 is smaller than the distance r2 of the second protruding portion Q2. The distance r2 of the second protruding portion Q2 is smaller than the distance r3 of the third protruding portion Q3. With this, when the position relationship between the three pairs of the protruding portions and the restriction guide portions in the circumference direction becomes (P1, Q1) (P2, Q2) (P3, Q3) as shown in FIG. 5A, the first to third protruding portions P1, P2, and P3 are restricted to be moved in the radially outward direction by the existences of the first to third restriction guide portions Q1, Q2, and Q3 which are in the set relations with the first to third protruding portions P1, P2, and P3. Three lock teeth 10 are held in the lock release positions, so that the external tooth gears 10d are not engaged with the internal tooth gear 7a.

When the first to third protruding portions P1, P2, and P3 are relatively pivoted from the positions in which the first to third protruding portions P1, P2, and P3 confront the restriction guide portions Q1, Q2, and Q3 which are in the set relations with the first to third protruding portions P1, P2, and P3, to a position in which the first to third protruding portions P1, P2, and P3 confront other restriction guide portions Q2, Q3, and Q1 which are positioned adjacent to the restriction guide portions Q1, Q2, and Q3 in the counterclockwise direction, on the same side of the rotational direction with respect to the three protruding portions P1, P2, and P3, so that the the position relationship becomes (P1, Q2) (P2, Q3) (P3, Q1) as shown in FIG. 7, the first to third protruding portions P1, P2, and P3 are arranged to avoid interference with the other first to third restriction guide portions Q2, Q3, and Q1.

Hereinafter, a structure to avoid the interference is illustrated below. Each of the first to third restriction guide portions Q1, Q2, and Q3 of the cover member 7 has an arc shape extending along the circumference of the inner circumference surface 7c of the cover member 7. Differences (W1-W2) and (W2-W3) which are differences of protruding sizes (widths) W1, W2, and W3 of the first to third restriction guide portions Q1, Q2, and Q3 from the inner circumference surface 7c are set larger than a movement distance of the first to third protruding portions P1, P2, and P3 between the lock release positions in which the first to third protruding portions P1, P2, and P3 are abutted and slid on the inner circumference surface of the first to third restriction guide portions Q1, Q2, and Q3 which are in the set relations with the first to third protruding portions P1, P2, and P3, and the lock positions in which the external tooth gears 10d are engaged with the internal tooth gear 7a.

Accordingly, when the first to third protruding portions P1, P2, and P3 are relatively moved (pivoted) from the positions in which the first to third protruding portions P1, P2, and P3 confront the restriction guide portions Q1, Q2, and Q3 which are in the set relations with the first to third protruding portions P1, P2, and P3, to the positions in which the first to third protruding portions P1, P2, and P3 confront the other restriction guide portions Q2, Q3, and Q1 positioned adjacent to the restriction guide portions Q1, Q2, and Q3 on the left side (on the counterclockwise direction's side) of the restriction guide portions Q1, Q2, and Q3, on the same side of the movement direction (the pivot direction) with respect to the first to third protruding portions P1, P2, and P3, the first to third protruding portions P1, P2, and P3 are located in positions in which the first to third protruding portions P1, P2, and P3 confront the other first to third restriction guide portions Q2, Q3, and Q1 adjacent to the first to third protruding portions P1, P2, and P3. That is, the position relationship between the protruding portions and the restriction guide portions become (P1, Q2) (P2, Q3) (P3, Q1). The first protruding portion P1 confronts the second restriction guide portion Q2. The second protruding portion P2 confronts the third restriction guide portion Q3. The third protruding portion P3 confronts the first restriction guide portion Q1. In this state, the first protruding portion P1 located on the innermost position confronts the second restriction guide portion Q2 which has the second largest width as shown in FIG. 7B. Accordingly, the first protruding portion P1 is not abutted on the second restriction guide portion Q2 so that the first protruding portion P1 can be moved to the lock position. Moreover, the second protruding portion P2 located in the second position from the inside (having the second longest distance from the center) confronts the third restriction guide portion Q3 which has the third largest width as shown in FIG. 7C. Accordingly, the second protruding portion P2 is not abutted on the third restriction guide portion Q3 so that the second protruding portion P2 can be moved to the lock position. Besides, in the third protruding portion P3 located in the third position from the inside, there is provided an escape space which is formed in the axial direction, and which is for preventing the interference with the first restriction guide portion Q1 having the largest width.

That is, the cover member 7 includes the escape space 7e which is recessed in the first restriction guide portion Q1 on the base frame 5's side, and which is formed between the first restriction guide portion Q1 and the lock tooth 10 in the axial direction. Moreover, the cover member 7 includes an escape space 7f which is recessed in the second restriction guide portion Q2 on the base frame 5's side, and which is formed between the second restriction guide portion Q2 and the lock tooth 10 in the axial direction. As shown in FIGS. 5B and 5D and FIGS. 7B and 7D, axial heights of the first restriction guide portion Q1 and the second restriction guide portion Q2 from the bottom portion of the circular recessed portion 7b are set to substantially half of an axial height of the third guide portion Q3. An axial height between the first restriction guide portion Q1 and the lock tooth 10 in the escape space 7e is represented by H2. A protruding quantity of the third protruding portion P3 in the axial direction is represented by H1. The axial height H2 is set larger than the protruding quantity H1 (H2 > H1).

As shown in FIG. 1B, the body frame 5 includes three rotation prevention protrusion portions 5b which are formed on an outside surface of the body frame 5, and each of which is positioned between one of the shaft protruding portions 11 and one of the guide protruding portions 12 adjacent to the one of the shaft protruding portions 11. As shown in FIG. 9, the rotation prevention protrusion portions 5b are mounted, respectively, in rotation preventing holes 4a formed in the base bracket 4, and joined with the rotation preventing holes 4a by welding. On the other hand, in the cover member 7, the first to third restriction guide portions Q1, Q2, and Q3 are formed on the inner surface of the cover member 7 by embossing to protrude in the radially inward direction. With this, the cover member 7 includes recessed portions 7g-7i formed on an outer surface of the cover member 7. The cover member 7 are mounted in the arm bracket 6 by using the recessed portions 7g-7i, and joined with the arm bracket 6 by the welding so that the cover member 7 does not rotate relative to the arm bracket 6.

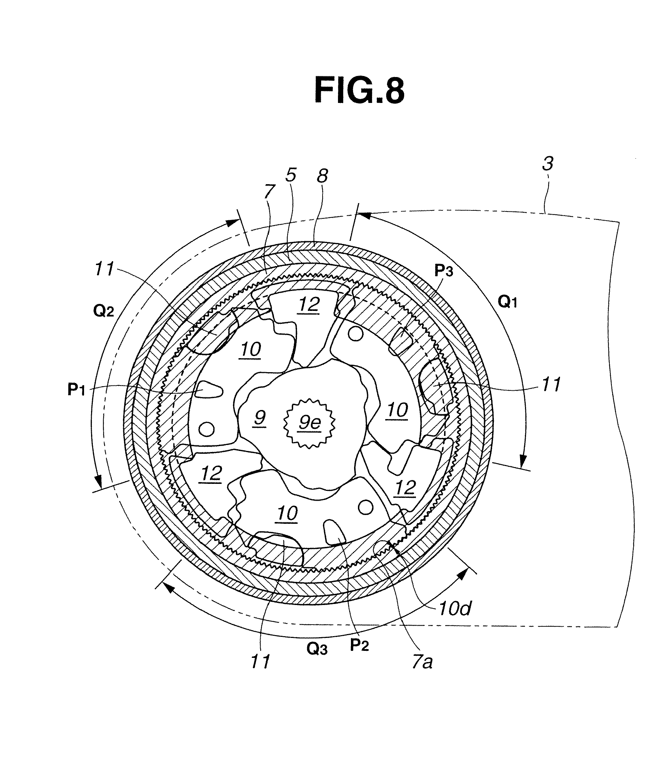

Moreover, there is provided a stopper (not shown) which is disposed between the base bracket 4 and the arm bracket 6, and which is arranged to restrict the seat back 3 from pivoting further in the clockwise direction from the full flat position of FIG. 8.

### (Operation)

Next, operations of the vehicular seat reclining apparatus 1 are illustrated.
In a state in which the vehicular seat reclining apparatus 1 is assembled in the seat, the cam 9 is normally pivoted in the counterclockwise direction by the urging force of the spring 19, as shown in FIG. 1. The lock cam surfaces 9a push the lock teeth 10, and each of the lock teeth 10 is pivoted about one of the shaft protruding portions 11 in the clockwise direction. The external gears 10d are moved in the radially outward direction, and engaged with the internal tooth gears 7a of the cover member 7. That is, the lock teeth 10 are in the lock positions in which the pivot movement of the seat back 3 is restricted.

Next, when the operation lever 20 is operated so that the operation shaft 15 is pivoted in the clockwise direction of FIG. 9 against the urging force of the spring 19, the engagements of the lock cam surfaces 9a of the cam 9 and the lock teeth 10 are released. The lock release cam surfaces 9b push the lock teeth 10 in the counterclockwise direction. Accordingly, each of the lock teeth 10 is pivoted about the one of the shaft protruding portions 11 in the counterclockwise direction. The engagements between the external gears 10d and the internal tooth gear 7a are released, and the lock teeth 10 are moved to the lock release positions. With this, the seat back 3 with the arm bracket 6 to which the cover member 7 is mounted is pivoted in the forward tilting direction by the urging force of the spring (not shown). Then, when the seat back 3 is pivoted in the rearward tilting direction against the urging force of the spring (not shown) and the hand is released from the operation lever 20 in a desired angle position of the seat back 3, the cam 9 is pivoted in the counterclockwise direction by the urging force of the spring 19. The lock cam surfaces 9a push the lock teeth 10. Accordingly, the lock teeth 10 are pivoted in the clockwise direction, and the external tooth gears 10d are engaged with the internal tooth gear 7a. The lock teeth 10 are returned to the lock positions of FIG. 1 again.

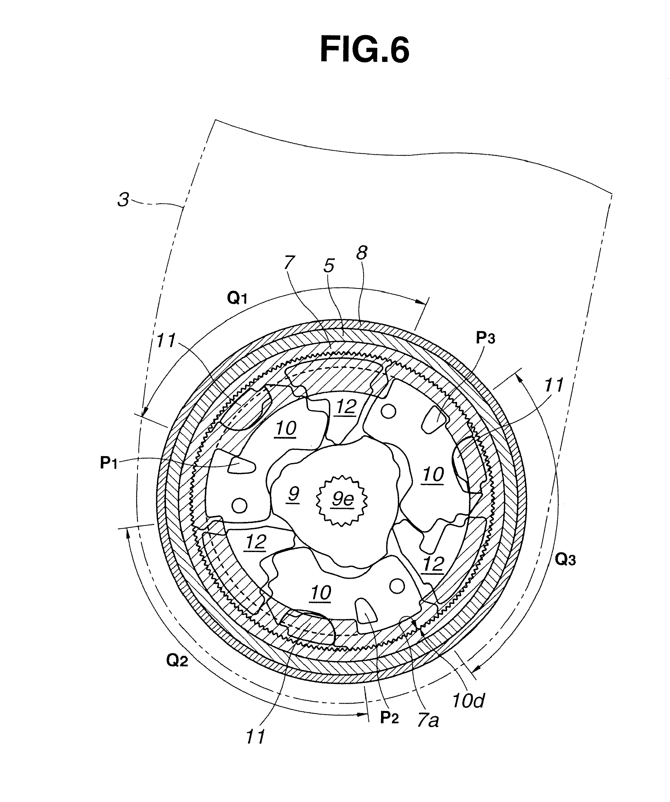

Next, the pivot positions of the seat back are illustrated at each of a table lock position of FIG. 4, a free range of FIG. 5A, a first lock position of FIG. 6, a reclining range of FIG. 7A, and a full flat position of FIG. 8. The table lock position represents a position in which the seat back 3 is tilted to the flat state in the forward direction. The free range represents a range in which the seat back is not locked, and which is from the first lock position to the table lock position. The first lock position represents a position in which the seat back is slightly tilted in the rearward direction from an upright position. The reclining range represents a range from the first lock position to the full flat position. The full flat position represents a position in which the seat back is tilted to a flat state in the rearward direction.

First, when the seat back 3 is in the angle position of the free range in which the seat back 3 is not locked as shown in FIG. 5A, the first to third protruding portions P1, P2, and P3 of the three lock teeth 10 provided on the body frame 5, and the first to third restriction guide portions Q1, Q2, and Q3 formed on the cover member 7 are, respectively, in the position relationship of (P1, Q1) (P2, Q2) (P3, Q3). The first to third protruding portions P1, P2, and P3 and the first to third restriction guide portions Q1, Q2, and Q3 which are in the set relations confront each other. The first to third protruding portions P1, P2, and P3 are restricted to be moved in the radially outward directions. The external tooth gears 10d are not engaged with the internal tooth gear 7a of the cover member 7. Accordingly, the vehicular seat reclining apparatus is not locked.

Next, when the seat back 3 is urged in the forward direction of the vehicle by the spring (not shown) and the cover member 7 is pivoted in the counterclockwise direction from the position of FIG. 5A, the first to third protruding portions P1, P2, and P3 of the three lock teeth 10 are relatively slid on the inner circumference surface of the first to third restriction guide portions Q1, Q2, and Q3 of the cover member 7. Then, the first to third protruding portions P1, P2, and P3 of the three lock teeth 10 are separated from the first to third restriction guide portions Q1, Q2, and Q3, as shown in FIG. 4. The first to third protruding portions P1, P2, and P3 are allowed to be moved in the radially outward directions. The cam 9 is pivoted in the counterclockwise direction by the urging force of the spring 19. The external tooth gears 10d are engaged with the internal tooth gear 7a. The seat back 3 is in the table lock position in which the seat back 3 becomes the substantially flat state. The vehicular seat reclining apparatus is locked.

Next, when the seat back 3 is pulled up (raised) against the force of the spring (not shown) from the state shown in FIG. 5A, the cover member 7 is pivoted in the clockwise direction. The first to third protruding portions P1, P2, and P3 of the three lock teeth 10 are relatively slid on the inner circumference surfaces of the first to third restriction guide portions Q1, Q2, and Q3 of the cover member 7. Then, the first to third protruding portions P1, P2, and P3 of the three lock teeth 10 are separated from the first to third restriction guide portions Q1, Q2, and Q3 of the cover member 7, as shown in FIG. 6. The first to third protruding portions P1, P2, and P3 are allowed to be moved in the radially outward directions. The cam 9 is pivoted in the counterclockwise direction by the urging force of the spring 19. The external tooth gears 10d are engaged with the internal tooth gear 7a. The vehicular seat reclining apparatus is locked in the first lock position which is a frontmost position in the reclining range.

Next, when the seat back 3 is further tilted in the rearward direction and the seat back 3 is positioned in the angle position of the reclining region as shown in FIG. 7A, the cover member 7 is further pivoted in the clockwise direction. The first to third protruding portions P1, P2, and P3 of the three lock teeth 10 are relatively pivoted in the counterclockwise direction. The first to third protruding portions P1, P2, and P3 confront the first to third restriction guide portions Q2, Q3, and Q1 which are positioned in the counterclockwise direction adjacent to the first to third restriction guide portions Q1, Q2, and Q3 that are in the set relations with the first to third protruding portions P1, P2, and P3. The position relationships between the first to third protruding portions P1, P2, and P3 and the first to third restriction guide portions Q1, Q2, and Q3 become (P1, Q2) (P2, Q3) (P3, Q1). The first protruding portion P1 located in the innermost position confronts the second restriction guide portion Q2 having the second wider width. Accordingly, the first protruding portion P1 does not interfere with the second restriction guide portion Q2. The second protruding portion P2 located in the second position from the inside confronts the third restriction guide portion Q3 having third largest width. Accordingly, the second protruding portion P2 does not interfere with the third restriction guide portion Q3. The third protruding portion P3 located in the third position from the inside confronts the first restriction guide portion Q1 having the largest radial width W1. However, the third protruding portion P3 has a small axial protruding length H1 so that the third protruding portion P3 can be moved within the escape space 7e which has the axial size H2, and which is provided between the first restriction guide portion Q1 and the lock tooth 10. In this way, the first to third protruding portions P1, P2, and P3 are allowed to be moved in the radially outward directions. Accordingly, the external tooth gears 10d of the three lock teeth 10 are engaged with the internal tooth gear 7a of the cover member 7. Consequently, the vehicular seat reclining apparatus is locked.

Finally, when the operation lever 20 is operated to pivot the operation shaft 15 in the clockwise direction of FIG. 9 against the urging force of the spring 19 and the seat back 3 is tilted in the rearward direction of the vehicle, the seat back 3 is moved to the full flat position as shown in FIG. 8. In this full flat position, the position relationship between the first to third protruding portions P1, P2, and P3 and the first to third restriction guide portions Q1, Q2, and Q3 become (P1, Q2) (P2, Q3) (P3, Q1), like the angle position of the reclining range of the seat back 3, as shown in FIG. 7A. The first to third protruding portions P1, P2, and P3 confront the other first to third restriction guide portions Q2, Q3, and Q1 which are not in the set relations with these first to third protruding portions P1, P2, and P3. The first to third protruding portions P1, P2, and P3 do not interfere with these other first to third restriction guide portions Q2, Q3, and Q1. The lock teeth 10 are moved in the radially outward directions. The external tooth gears 10d of the lock teeth 10 are engaged with the internal tooth gear 7a of the cover member 7. Accordingly, the vehicular seat reclining apparatus is locked. Consequently, the seat back 3 can be pivoted and locked from the full flat position on the rearward tilting side shown in FIG. 8, to the flat position on the frontward tilting side shown in FIG. 4. Accordingly, it is possible to ensure the operation angle of 180 degrees.

In this vehicular seat reclining apparatus according to the embodiment of the present invention, the radially outward movements of the three first to third protruding portions P1, P2, and P3 provided in the circumferential direction are restricted by the three first to third restriction guide portions Q1, Q2, and Q3 which are provided in the circumferential direction, and which are in the set relations with the first to third protruding portions P1, P2, and P3. When the first to third protruding portions P1, P2, and P3 are relatively pivoted in the counterclockwise direction by the pivot movement of the cover member 7 in the clockwise direction, and the first to third protruding portions P1, P2, and P3 are located in positions to confront the other first to third restriction guide portions Q2, Q3, and Q1 which are positioned adjacent to the first to third restriction guide portions Q1, Q2, and Q3 which are in the set relations with the first to third protruding portions P1, P2, and P3, on the one direction's side of these first to third restriction portions Q1, Q2, and Q3, the first to third protruding portions P1, P2, and P3 are allowed to be moved in the radially outward directions. In this way, the three protruding portions P1, P2, and P3 are simultaneously restricted or allowed when the movements of the three first to third protruding portions P1, P2, and P3 are restricted and also when the movements of the three first to third protruding portions P1, P2, and P3 are allowed. Therefore, it is possible to improve the operability of the vehicular seat reclining apparatus. Moreover, when the three first to third protruding portions P1, P2, and P3 confront the first to third restriction guide portions Q1, Q2, and Q3 (substantially 120 degree) which are provided on the inner circumference surface of the circular recessed portion 7b at substantially regular intervals, which are in the set relations with these three first to third protruding portions P1, P2, and P3, the three first to third protruding portions P1, P2, and P3 are restricted. When the cover member 7 is pivoted and the three first to third protruding portions P1, P2, and P3 confront the other first to third restriction guide portions Q2, Q3, and Q1 (substantially 120 degrees) which are positioned in the counterclockwise direction of the rotational direction adjacent to the first to third restriction guide portions Q1, Q2, and Q3 which are in the set relations with these three first to third protruding portions P1, P2, and P3, these three first to third protruding portions P1, P2, and P3 are not restricted. Accordingly, it is possible to ensure the operation region of substantially 180 degrees including the free range of substantially 90 degrees in which the seat back 3 is not locked, and the reclining range of substantially 90 degrees in which the seat back 3 is locked. Besides, the free range is not limited by the above-described angle (90 degrees), it is possible to freely set the free range within the operation angle of the substantially 180 degrees.

In this vehicular seat reclining apparatus, for avoiding the interference of the third protruding portion P3 with the first restriction guide portion Q1 which is positioned in the counterclockwise direction of the rotational direction adjacent to the third restriction guide portion Q3 that is in the set relation with the third protruding portion P3, the first guide portion Q1 has the small axial protrusion length from the bottom surface of the circular recessed portion 7b, so that the escape space 7e is formed in the axial space between the first guide portion Q1 and the lock tooth 10. Moreover, the third protruding portion P3 has the small axial protrusion length so that the third protruding portion P3 is moved within the escape space 7e. With this, it is possible to avoid the interference between the third protruding portion P3 and the first restriction guide portion Q1. Accordingly, it is possible to easily attain the structure to avoid the interference.

In the seat reclining apparatus according to the embodiment of the present invention, the base frame 5 is joined with the base bracket 4, and the cover member 7 is joined with the arm bracket 6. However, the base frame 5 may be joined with the arm bracket 6. The cover member 7 may be joined with the base bracket 4. Moreover, in this embodiment, each of the lock teeth 10 is pivoted along the arc, so that the external tooth gear 10d is moved in the substantially radial direction along the arc line. However, the lock tooth 10 may be arranged to be moved in the radial direction along a linear line.

Moreover, in this embodiment, the first to third restriction guide portions Q1, Q2, and Q3 are provided on the inner circumference surface in the counterclockwise direction so that the widths of the first to third restriction guide portions Q1, Q2, and Q3 become smaller in this order in the circumference direction. On the other hand, the three lock teeth 10 have, respectively, the first to third protruding portions P1, P2, and P3 which are provided in this order in the counterclockwise direction, and which have radial lengths from the center that become greater in this order in the circumference direction. For avoiding the interference between the third protruding portion P3 and the first restriction guide portion Q1 which is located in the counterclockwise direction of the rotational direction adjacent to the third restriction guide portion Q3 that is in the set relation with the third protruding portion P3, the third protruding portion P3 has the small axial protrusion size smaller than the axial protrusion sizes of the first and second protruding portions P1 and P2. Moreover, the first restriction guide portion Q1 has the small protrusion size from the bottom of the circular recessed portion 7b of the cover member 7 toward the corresponding lock tooth 10, so that the escape space 7e is formed in the axial space between the first restriction guide portion Q1 and the corresponding lock tooth 10. However, the heights of the first to third restriction guide portions Q1, Q2, and Q3 from the corresponding lock tooth 10 may be decreased in this order in the counterclockwise direction, and the axial heights of the first to third protruding portions P1, P2, and P3 of the three lock teeth 10 may be decreased in this order in the circumference direction. In this case, even when the lowest third protruding portion P3 is relatively pivoted in either directions, the lowest third protruding portion P3 does not interfere with the first restriction guide portion Q1 or the second restriction guide portion Q2. Moreover, even when the second protruding portion P2 having the second highest height is relatively pivoted in the clockwise direction, the second protruding portion P2 does not interfere with the first restriction guide portion Q1 having the highest height. In this case, the three steps are provided in the radial direction, and the three steps are provided in the axial direction. Accordingly, there is a problem that the axial length of the vehicular seat reclining apparatus becomes long. However, it is possible to set the operation angle of the substantially 180 degrees in the either directions, irrespective of the rotational directions.

Moreover, when the three first to third protruding portions P1, P2, and P3 confront the other second, third, and first restriction guide portions Q2, Q3, and Q1 which are positioned in the counterclockwise direction adjacent to the first to third restriction guide portions Q1, Q2, and Q3 which are in the set relations with the first to third protruding portions P1, P2, and P3, on the same side of the rotational direction with respect to the three first to third protruding portions P1, P2, and P3, the first to third protruding portions P1, P2, and P3 are arranged so as not to interfere with the other restriction guide portions which are not in the set relations with the first to third protruding portions P1, P2, and P3. Moreover, when the three first to third protruding portions P1, P2, and P3 confront the other third, first, and second restriction guide portions Q3, Q1, and Q2 which are positioned in the clockwise direction adjacent to the first to third restriction guide portions Q1, Q2, and Q3 which are in the set relations with the first to third protruding portions P1, P2, and P3, the first to third protruding portions P1, P2, and P3 may be arranged so as not to interfere with the other restriction guide portions which are not in the set relations with the first to third protruding portions P1, P2, and P3. Moreover, it is optional to employ both of the above-described structures.

Moreover, as shown in FIG. 5C, the escape space 7f is formed in the second restriction guide portion Q2 which is in the set relation with the second protruding portion P2. However, the escape space may not be formed in the second restriction guide portion Q2, like the third restriction guide portion Q3 shown in FIG. 5D. Furthermore, in this case, it is optional to set the height of the second protruding portion P2 which is in the set relation with the second restriction guide portion Q2, to H1.

The seat reclining apparatus according to the present invention includes: a base member connected to one of a seat cushion and a seat back; a pivot member connected to the other of the seat cushion and the seat back, and arranged to be pivoted relative to the base member, the pivot member including an internal tooth gear formed on an inner circumference surface of the pivot member; three lock teeth which are disposed in a circumferential direction between the base member and the pivot member in an axial direction, and each of which has an external tooth gear; a guide protruding portion which is provided to the base member, and which guides the lock teeth to be moved in a radial direction; a cam which is disposed in a central position surrounded by the three lock teeth, which is arranged to push the lock teeth to be moved to a lock position in which the external tooth gear is engaged with the internal tooth gear, and a lock release position in which the external tooth gear is disengaged from the internal tooth gear; an urging member arranged to urge and pivot the cam in the lock direction; three protruding portions each of which is formed on one of the lock teeth, and each of which protrudes toward the pivot member; and three restriction guide portions each of which is formed into an arc shape, each of which is formed on an inner circumference surface of the pivot member, each of which protrudes toward a center in a radially inward direction, and which are arranged to be abutted on the protruding portions of the lock teeth, and thereby to restrict movements of the lock teeth to the lock positions, each of the protruding portions being in a set relation with one of the restriction guide portions, the three lock teeth being restricted to be moved to the lock positions when the three protruding portions are abutted, respectively, inner circumference surfaces of the three restriction guide portions which are in the set relations with the three protruding portions, the inner circumference surfaces of the three restriction guide portions and the three protruding portions which are in the set relations being positioned, respectively, in different positions in the radial direction so that, when the three protruding portions are pivoted to positions to confront other restriction guide portions that are positioned on one side of the rotational directions adjacent to the restriction guide portions which are in the set relations with the protruding portions, the protruding portions are not abutted on the inner circumference surfaces of the other restriction guide portions, and one of the restriction guide portions having an inner circumference surface located on a radially innermost side, having an escape space which is formed between the one of the restriction guide portions and the corresponding lock tooth in the axial direction, and which is arranged to avoid an interference with one of the protruding portions located on a radially outermost side.

In the seat reclining apparatus according to the present invention, when the seat back is in the angle position of the free range in which the seat back is not locked, the protruding portions of the three lock teeth provided to the base member confront the three restriction guide portions of the pivot member which are in the set relations with these protruding portions. The protruding portions are abutted on the inner circumference surface of the restriction guide portion so as to be restricted to be moved in the radially outward direction. Accordingly, the external tooth gears are not engaged with the internal tooth gear of the pivot member. The vehicular seat reclining apparatus is not locked. Next, when the seat back is raised in the rearward direction and the seat back is positioned in the reclining range, the pivot member is pivoted in one direction, and the protruding portions are relatively moved in the other direction. The protruding portions confront the other restriction guide portions which are positioned in the other direction adjacent to the restriction guide portion that are in the set relations with these protruding portions. The protruding portions are not abutted on the inner circumference surfaces of the other restriction guide portions. Accordingly, the three protruding portions are allowed to be moved in the radially outward direction. With this, the external tooth gears of the lock teeth are engaged with the internal tooth gear of the pivot member. The vehicular seat reclining apparatus is locked.

In the seat reclining apparatus according to the present invention, the three restriction guide portions are a first restriction guide portion, a second restriction guide portion, and a third restriction guide portion formed in the circumferential direction; the first to third restriction guide portions have protruding lengths which protrude in the radial direction toward the center, and which decrease in one direction of the rotational directions to decrease widths. The three protruding portions are a first protrusion portion, a second protrusion portion, and a third protrusion portion formed, respectively, on the three lock tooth; the first to third protruding portions have distances from the center of the base member which increase to correspond to the first to third restriction guide portions which are in the set relations with the first to third protruding portions. The escape space is located between the first restriction guide portion and the lock tooth in the axial direction; and the third protruding portion has an axial protrusion quantity set so that the third protruding portion is moved within the escape space so as not to interfere with the first restriction guide portion.

In the seat reclining apparatus according to the present invention, when the seat back is in the free range in which the seat back is not locked, the position relationship between the first to third protruding portions P1, P2, and P3 of the three lock teeth provided to the base member and the first to third restriction guide portions of the pivot member Q1, Q2, and Q3 becomes (P1, Q1) (P2, Q2) (P3, Q3). The protruding portions P1, P2, and P3 and the restriction guide portions Q1, Q2, and Q3 which are in the set relations confront each other. Accordingly, the first to third protruding portions P1, P2, and P3 are restricted to be moved in the radially outward directions. The external tooth gears of the lock teeth are not engaged with the internal tooth gear of the pivot member. Next, when the seat back is tilted in the rearward direction and the seat back is positioned in the angle position of the reclining range, the pivot member is pivoted in the one direction. The protruding portions are relatively pivoted in the other direction. The first to third protruding portions P1, P2, and P3 confronts the restriction guide portions Q2, Q3, and Q1 positioned on the other direction side adjacent to the first to third restriction guide portions Q1, Q2, and Q3 which is in the set relations with the first to third protruding portions P1, P2, and P3. The position relationship of the protruding portions and the restriction guide portions becomes (P1, Q2) (P2, Q3) (P3, Q1). The first protruding portion P1 positioned on the innermost side confronts the second restriction guide portion Q2 having the second largest width. Accordingly, the first protruding portion P1 does not interfere with the second restriction guide portion Q2. The second protruding portion P2 located on the second position from the inside confronts the third restriction guide portion Q3 having third largest width. Accordingly, the second protruding portion P2 does not interfere with the third restriction guide portion Q3. The third protruding portion P3 located on the third position from the inside confronts the first restriction guide portion Q1 having the largest width. However, the third protruding portion P3 has the small axial protruding length so that the third protruding portion P3 enters (passes through) the escape space axially between the first restriction guide portion Q1 and the lock tooth. Accordingly, even when the first to third restriction guide portions Q1, Q2, and Q3 exist, the first to third protruding portions P1, P2, and P3 are allowed to be moved in the radially outward directions. The external gears of the three lock teeth are engaged with the internal tooth gear of the pivot member, so that the vehicular seat reclining apparatus is locked.

The entire contents of Japanese Patent Application No. 2010-239417 filed October 26, 2010 are incorporated herein by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A seat reclining apparatus for a vehicle, the seat reclining apparatus comprising:
a base member connected to one of a seat cushion and a seat back;
a pivot member connected to the other of the seat cushion and the seat back, and arranged to be pivoted relative to the base member, the pivot member including an internal tooth gear formed on an inner circumference surface of the pivot member;
three lock teeth which are disposed in a circumferential direction between the base member and the pivot member in an axial direction, and each of which has an external tooth gear;
a guide protruding portion which is provided to the base member, and which guides the lock teeth to be moved in a radial direction;
a cam which is disposed in a central position surrounded by the three lock teeth, which is arranged to push the lock teeth to be moved to a lock position in which the external tooth gear is engaged with the internal tooth gear, and a lock release position in which the external tooth gear is disengaged from the internal tooth gear;
an urging member arranged to urge and pivot the cam in the lock direction;
three protruding portions each of which is formed on one of the lock teeth, and each of which protrudes toward the pivot member; and
three restriction guide portions each of which is formed into an arc shape, each of which is formed on an inner circumference surface of the pivot member, each of which protrudes toward a center in a radially inward direction, and which are arranged to be abutted on the protruding portions of the lock teeth, and thereby to restrict movements of the lock teeth to the lock positions,
each of the protruding portions being in a set relation with one of the restriction guide portions, the three lock teeth being restricted to be moved to the lock positions when the three protruding portions are abutted, respectively, inner circumference surfaces of the three restriction guide portions which are in the set relations with the three protruding portions,
the inner circumference surfaces of the three restriction guide portions and the three protruding portions which are in the set relations being positioned, respectively, in different positions in the radial direction so that, when the three protruding portions are pivoted to positions to confront other restriction guide portions that are positioned on one side of the rotational directions adjacent to the restriction guide portions which are in the set relations with the protruding portions, the protruding portions are not abutted on the inner circumference surfaces of the other restriction guide portions, and
one of the restriction guide portions having an inner circumference surface located on a radially innermost side, having an escape space which is formed between the one of the restriction guide portions and the corresponding lock tooth in the axial direction, and which is arranged to avoid an interference with one of the protruding portions located on a radially outermost side.

2. The seat reclining apparatus as claimed in claim 1, wherein the three restriction guide portions are a first restriction guide portion, a second restriction guide portion, and a third restriction guide portion formed in the circumferential direction; the first to third restriction guide portions have protruding lengths which protrude in the radial direction toward the center, and which decrease in one direction of the rotational directions to decrease widths,
wherein the three protruding portions are a first protrusion portion, a second protrusion portion, and a third protrusion portion formed, respectively, on the three lock tooth; the first to third protruding portions have distances from the center of the base member which increase to correspond to the first to third restriction guide portions which are in the set relations with the first to third protruding portions, and
wherein the escape space is located between the first restriction guide portion and the lock tooth in the axial direction; and the third protruding portion has an axial protrusion quantity set so that the third protruding portion is moved within the escape space so as not to interfere with the first restriction guide portion.
